# FASCICULE DE BREVET EUROPEEN

(11) **EP 0 623 879 B1**
(45) Date de publication et mention de la délivrance du brevet: **10.05.2000**
(21) Numéro de dépôt: 94201181.8
(22) Date de dépôt: 29.04.1994
(51) Int. Cl.: G06F 12/14

(54) **Microprocesseur avec mémoire sécurisée**
Mikroprozessor mit sicherem Speicher
Microprocessor with secure memory

(30) Priorité: 06.05.1993 FR 9305556
(43) Date de publication de la demande: 09.11.1994
(73) Titulaire: SCHLUMBERGER Systèmes, 92120 Montrouge (FR)
(72) Inventeur: Rhelimi, Alain, F-78150 Le Chesnaye (FR)

(56) Documents cités:
- EP-A- 0 512 542
- IBM TECHNICAL DISCLOSURE BULLETIN., vol.32, no.5A, Octobre 1989, ARMONK US pages 416 - 417 'Memory protection in chip cards'
- IBM TECHNICAL DISCLOSURE BULLETIN., vol.29, no.11, Avril 1987, ARMONK US pages 4971 - 4975 'Memory map protection circuit'

## Description

La présente invention concerne un microprocesseur qui - entre autres - comporte une mémoire ROM, une mémoire RAM et une mémoire non volatile et programmable (MNVP).

D'une façon plus précise, la présente invention concerne un microprocesseur qui peut être utilisé pour de multiples applications et où pour cela la mémoire MNVP contient au moins un programme prestataire qui contrôle l'application.

Les microprocesseurs utilisés aujourd'hui disposent d'une mémoire ROM dans laquelle réside un Chip Operating System (COS).
L'écriture dans la ROM est peu flexible et l'addition de fonctionnalités complémentaires est normalement longue et coûteuse. Une autre solution est un chargement d'un programme complémentaire dans la Mémoire MNVP (Mémoire Non Volatile et Programmable) précédé d'un contrôle sévère dudit programme.
Par ailleurs, cette contrainte perdure dans les environnements multi-applications où plusieurs programmes prestataires partagent les mêmes ressources matérielles.

Cependant le système d'exploitation perd le contrôle de cette responsabilité si l'exécution du micro-code est transférée à un sous-programme extérieur au COS. L'exécution d'un programme prestataire hors contrôle du système d'exploitation peut-être dangereux pour la sécurité des applications hébergées au sein d'une même carte.

Par exemple, l'exécution d'un programme prestataire effectuant un vidage de la mémoire peut divulguer des secrets fondamentaux pour l'organisation de l'application (clés secrètes). Une solution est la qualification des programmes prestataires avant leurs chargements dans la mémoire de la carte, mais cette solution est lourde.

Un cheval de Troie est toujours envisageable si aucune qualification préalable du logiciel chargé est faite. Le chargement simple et sécurisé de n'importe quelle application est donc impossible. En résumé, l'émetteur d'une carte ne peut pas garantir à un prestataire la sécurité totale de son application sans la qualification et l'expertise de l'ensemble des programmes prestataires hébergés dans la carte.

En général, on sait qu'un mécanisme logiciel de protection sans assistance matérielle est fraudable (contrôle du COS) car celui-ci perd le contrôle du microprocesseur quand le programme prestataire s'exécute.

Le document IBM TDB Vol. 32, No. 5A, October 1989, pp. 416-417 décrit un microprocesseur selon le préambule de la revendication 1.

Pour éviter ces inconvénients, l'objet de la présente invention est de fournir un microprocesseur qui garantit l'intégrité, l'inviolabilité et la confidentialité de données privées issues d'un environnement multi-application géré par ledit microprocesseur.

Afin d'atteindre ce but l'invention propose un microprocesseur selon la revendication 1. Les revendications dépondantes définissant des caractéristiques additionelles.

L'avantage de l'invention se trouve dans le fait que tout accès à un espace mémoire appartenant à une application ou partagé par des applications déterminées est sous le contrôle du Chip Operating System (COS) même si cet accès a lieu lors de l'exécution d'un programme extérieur au COS.

Ainsi la solution inventive et matérielle ne représente plus la vulnérabilité de toute solution logicielle.

Selon l'invention les instructions d'accès mémoire contenues dans la mémoire MNVP provoquent (lors d'un cycle FETCH ) une procédure d'interruption sur un vecteur dans le COS. Le sous-programme servi par ce vecteur vérifie que l'adresse spécifiée dans l'instruction appartient au domaine mémoire de l'application. Dans la négative, une procédure d'exception est engagée.

En d'autres termes, selon l'invention, une instruction de ce type est remplacée par le microprocesseur (et cela de façon transparente) par un appel à un sous-programme d'interruption dans le COS en ROM.

L'invention sera mieux comprise à la lecture de la description qui suit et qui explique en détails les multiples aspects et les avantages de l'invention en se référant aux figures annexées sur lesquelles :
- Fig. 1 :: les composants principaux d'un microprocesseur selon l'invention illustrée en schéma;
- Fig. 2 :: le principe de la fonction d'une commande FETCH;
- Fig. 3 :: un schéma montrant une exécution d'un programme prestataire selon l'invention dans une application ;
- Fig. 4 :: des tables des descripteurs de segments des mémoires selon l'invention et
- Fig. 5 :: des tables illustrant un décodage d'une commande FETCH selon l'invention.

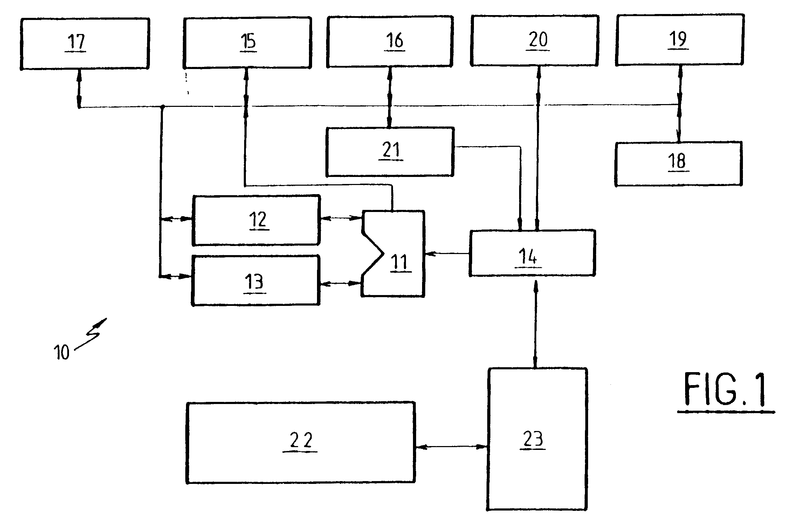

Comme le montre la figure 1, un microprocesseur 10 selon l'invention comporte une ALU (Arithmetic Logic Unit) 11, deux registres temporaires 12 et 13, un registre d'instructions et décodeur 14, une mémoire ROM 15, un registre du PROGRAM STATUS WORD 16, un accumulateur 17, une mémoire RAM 18, un registre du compteur programme 19, une mémoire MNVP(Mémoire Non-Volatile-et-Programmable) 20, préférablement une EPROM ou EEPROM, un circuit décodeur 21 du type de mémoire et enfin un circuit CONTROL & TIMING 22 et au moins un circuit CONDITIONAL BRANCH LOGIC 23.

Il est évident à chaque expert que tous ces composants enoncés sont reliés par un BUS ou un système de BUS qui pour faciliter la figure 1 n'est pas marqué par numéro(s) de référence.

Chaque microprocesseur possède un jeu d'instructions décomposé en plusieurs catégories de fonctionnalités :
1. les instructions destinées à l'adressage,
2. les instructions arithmétiques et logiques,
3. les instructions de saut et de gestion.

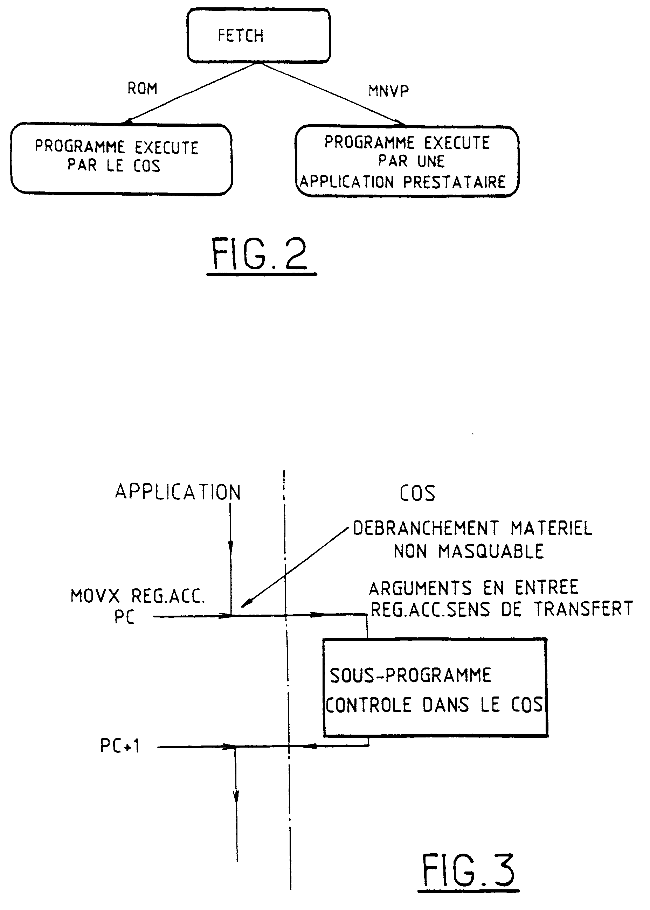

Comme le montre la figure 2, en général un microprocesseur peut déterminer selon le circuit 21 si un cycle FETCH est réalisé à partir de la mémoire ROM ou d'une mémoire MNVP.

Selon l'invention, il n'y a aucune relation directe entre la MNVP et la ROM qui pourrait servir l'accès d'une application à la ROM. Pour illustrer ce principe de l'invention, par exemple, le jeu d'instructions du microprocesseur exécutable par une commande FETCH ne possède que deux instructions permettant l'accès à la MNVP, soit :
- **MOVX REG, ACC :**: Ecriture du contenu d'un accumulateur dans la mémoire d'adresse contenue dans un registre REG,
- **MOVX ACC, REG :**: Lecture du contenu de la mémoire d'adresse contenue dans le registre REG dans l'accumulateur.

La figure 3 illustre comment l'invention pendant une exécution d'un programme prestataire garantit que toutes instructions d'adressage réalisées par un FETCH en MNVP provoquent une procédure d'interruption sur un vecteur dans le COS.

Chaque application dispose d'une collection de segments de données. Ces segments possèdent les caractéristiques suivantes :
- adresse de début,
- adresse de fin,
- attribut (READ ONLY, READ/WRITE, WRITE ONLY).

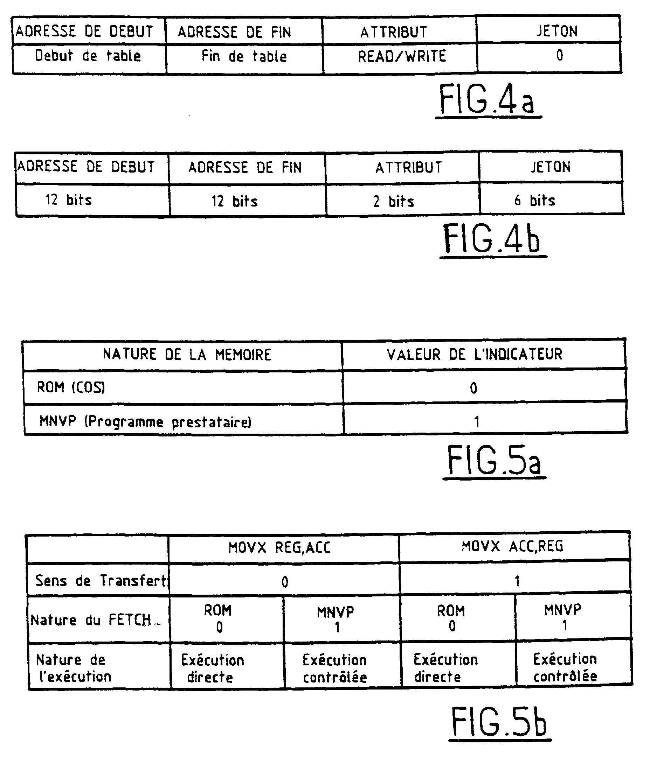

Ces caractéristiques sont notées dans une table indexée par une valeur affectée à une application. Nous appellerons JETON cette valeur. Une telle table selon l'invention qui montre les descripteurs des segments de mémoires, est illustrée dans la figure 4a.

Le sous-programme de contrôle et d'exécution (voir aussi Fig. 3) compare l'ensemble des caractéristiques des segments de l'application courante avec ses arguments d'entrée. Si le contrôle est correct, l'instruction est exécutée à partir du COS (FETCH en ROM) qui lui n'est pas soumis au mécanisme de débranchement. Dans le cas contraire, l'exécution n'a pas lieu et des procédures spécifiques peuvent être entreprises pour arrêter l'application (KILL).

Les tailles des champs peuvent être variables et évoluer en fonction de l'organisation matérielle de la carte à mémoire et du nombre d'applications qu'elle doit héberger. Les valeurs indiquées dans la figure 4b sont des exemples en titres non-restrictifs.

Préférablement la table possède autant de descripteurs de segments qu'elle a de segments de mémoire. Cette technique permet de spécifier des données partagées en définissant des chevauchements de segments pour des applications différentes.

Chaque application est caractérisée par un jeton qui lui est affecté lors de sa création (numéro séquentiel de création). Quand le COS lance l'exécution d'un programme prestataire, il note dans un registre la valeur du jeton de l'application courante. Les jetons sont numérotés à partir de 1, la valeur 0 etant réservée au COS.

En conséquence, la table des descripteurs de segments de données commence par un descripteur protégeant la table elle-même (jeton= 0).

Ainsi la table est protégée contre toute modification par un programme prestataire désireux d'étendre ses droits (fraude, vidage de la mémoire, lecure de secrets). Seul l'application du jeton 0 (COS) peut modifier la table.

Par ailleurs, les données sensibles du COS peuvent être rangées également dans un segment protégé (ex. : registre contenant le jeton de l'application courante).

Pendant l'exécution du programme prestataire, le sous-programme du COS chargé du contrôle examine chaque descripteur de segment possédant un jeton identique au jeton de l'application courante. Si l'adresse en argument n'appartient à aucun des segments examinés, alors l'adresse est déclarée illégale. Si l'adresse appartient à un descripteur, alors l'attribut de ce segment est comparé au sens de transfert en argument.

Selon un mode de réalisation préféré de l'invention le nombre d'instructions d'adressage destinées à l'MNVP est limité. La valeur est raisonnablement 2 (une pour l'écriture et une pour la lecture). Par ailleurs, et comme déjà énoncé, il est nécessaire d'interdire au programme prestataire les instructions d'accès à une information en ROM quand le cycle de FETCH est en MNVP. Celà nécessite l'utilisation d'un second vecteur de contrôle (second sous-programme de contrôle) ou d'un registre spécial où le microprocesseur note la nature de la mémoire adressée (voir figure 4).

L'invention garantit que la nature du FETCH est directement déduite du circuit décodeur 21 d'adresse du plan mémoire - cela implique que le microprocesseur partage son bus entre mémoire ROM et MNVP. Un décodage de l'instruction (OPCODE) est la combinaison de l'OPCODE lu sur le bus et d'un indicateur de la nature du FETCH.
L'exemple suivant illustre ce concept en se référant à la figure 5b :
Soit un jeu d'instructions disposant de deux instructions d'adressage en MNVP, c'est-à-dire :
- MOVX REG, ACC, : Ecriture en mémoire
- MOVX ACC, REG, : Lecture en mémoire.

Exécution directe n'est autre qu'une instruction banale d'adressage mémoire à partir d'un pointeur et l'exécution contrôlée n'est autre qu'une instruction CALL (appel d'un sous-programme ou d'un vecteur d'interruption) à une adresse fixe en ROM (vecteur). Ce sous-programme dispose de 3 arguments:
1. le registre REG (pointeur banalisé d'adressage),
2. l'accumulateur,
3. un indicateur de sens de transfert (écriture ou lecture) qui peut être un FLAG dans le registre de statuts standard.

## Revendications

1. Microprocesseur (10) comportant :
- une mémoire ROM (15) dans laquelle réside un système d'exploitation (COS) ;
- une mémoire RAM (18) ;
- une mémoire non-volatile-et-programmable MNVP (20) comportant un programme prestataire ; et
- une instruction à exécuter,
caractérisé en ce que ledit microprocesseur (10) est muni d'un circuit décodeur électronique (21) qui détermine la nature de la mémoire qui contient ladite instruction à exécuter et, dans le cas où cette instruction est une instruction du programme prestataire, ledit microprocesseur (10) procède à un déroutement sur un vecteur situé dans la mémoire ROM (15), le sous-programme servi par ce vecteur vérifiant que l'adresse spécifiée dans l'instruction appartient un domaine mémoire du programme prestataire.

2. Microprocesseur (10) selon la revendication 1, caractérisé en ce que le circuit décodeur (21) décode un microcode indexé par un code opératoire contenu dans une ou les mémoires de programme en fonction de la nature de la mémoire.

3. Microprocesseur (10) selon l'une des revendications 1 ou 2, caractérisé en ce que l'instruction est une instruction d'adressage mémoire et en ce que le déroutement sur le vecteur situé dans la mémoire ROM (15) est systématique.

## Claims

1. A microprocessor (10) comprising:
• a ROM (15) in which an operating system (COS) resides;
• a RAM (18);
• a programmable non-volatile memory (PNVM) (20) containing a service program; and
• an instruction to be executed,
characterized in that said microprocessor (10) is provided with an electronic decoder circuit (21) which determines the nature of the memory containing said instruction to be executed and, in the event of said instruction being an instruction of a service-supplier's program, said microprocessor (10) proceeds via a diversion to a vector situated in the ROM (15), the subprogram served by said vector verifying that the address specified in the instruction belongs to a memory domain of the service-supplier's program.

2. A microprocessor (10) according to claim 1, characterized in that the decoder circuit (21) decodes microcode indexed by an opcode contained in a program memory as a function of the nature of the memory.

3. A microprocessor (10) according to claim 1 or 2, characterized in that the instruction is a memory addressing instruction and in that the diversion via the vector situated in the ROM (15) takes place systematically.

## Patentansprüche

1. Mikroprozessor (10) mit
- einem ROM-Speicher (15), in welchem ein Betriebssystem (COS) abgelegt ist,
- einem RAM-Speicher (18),
- einem nicht flüchtigen und programmierbaren Speicher MNVP (20), der ein geladenes Programm umfaßt, und
- einer auszuführenden Instruktion,
**dadurch gekennzeichnet**, daß der Mikroprozessor (10) mit einem elektronischen Dekodier-Schaltkreis (21) ausgestattet ist, welcher die Art des Speichers, der die auszuführende Instruktion enthält, bestimmt und, in dem Falle, in welchem diese Instruktion eine Instruktion des geladenen Programmes ist, der Mikroprozessor (10) einen nicht programmierten Sprung auf einen im ROM-Speicher (15) abgelegten Vektor ausführt, wobei das durch den Vektor bestimmte Unterprogramm überprüft, ob die in der Instruktion angegebene Adresse zu dem Speicherbereich des geladenen Programms gehört.

2. Mikroprozessor (10) nach Anspruch 1, dadurch gekennzeichnet, daß der Dekodier-Schaltkreis (21) einen Mikrocode dekodiert, der durch einen Operationscode indiziert wird, der in einem oder den Programmspeichern abhängig von der Art des Speichers enthalten ist.

3. Mikroprozessor (10) nach einem der Ansprüche 1 oder 2, dadurch gekennzeichnet, daß die Instruktion eine Speicheradressierungsinstruktion ist und daß der nicht programmierte Sprung auf den Vektor, der in dem ROM-Speicher (15) abgelegt ist, systematisch ist.
